(19) Europäisches Patentamt
European Patent Office
Office européen des brevets

(11) **EP 4 635 751 B1**

(12) **EUROPEAN PATENT SPECIFICATION**

(45) Date of publication and mention
of the grant of the patent:
**24.06.2026 Bulletin 2026/26**

(21) Application number: **25166971.9**

(22) Date of filing: **28.03.2025**

(51) International Patent Classification (IPC):
**B60C 9/20** (2006.01)

(52) Cooperative Patent Classification (CPC):
**B60C 9/2009;** B60C 2009/2016; B60C 2009/2074;
B60C 2009/2077; B60C 2009/2083;
B60C 2009/209; B60C 2011/0033; B60C 2200/04;
Y02T 10/86

(54) **PNEUMATIC TIRE**

LUFTREIFEN

PNEUMATIQUE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **16.04.2024 JP 2024066321**

(43) Date of publication of application:
**22.10.2025 Bulletin 2025/43**

(73) Proprietor: **Sumitomo Rubber Industries, Ltd.**
**Kobe-shi, Hyogo 651-0072 (JP)**

(72) Inventors:
• **MIYOSHI, Kosuke**
**Kobe-shi, 651-0072 (JP)**
• **SAWAKAMI, Isao**
**Kobe-shi, 651-0072 (JP)**
• **IMAI, Daiki**
**Kobe-shi, 651-0072 (JP)**
• **MISAKI, Momoka**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
JP-A- 2003 226 111    JP-A- 2022 147 003
JP-A- 2023 060 432    JP-A- H05 238 202

**Description**

BACKGROUND OF THE INVENTION

Field of the Invention

The present invention relates to a pneumatic tire.

Background Art

Japanese Laid-Open Patent Publication No. 2023-060432 A suggests a pneumatic tire having a belt layer in which reinforcing cords are covered by a rubber composition. The tire is expected to improve ride comfort and steering stability during high-speed running by specifying a thickness of the tread portion, a complex elastic modulus of the rubber composition, and the number of the aligned reinforcing cords in association with each other.

A tire corresponding with the preamble of claim 1 is known from JP 2022 147003 A.

Further prior art is known from JP H05 238202 A and JP 2003 226111 A.

In recent years, vehicles have been required to enhance fuel economy performance, and rolling resistance of tires mounted to vehicles has also been required to be further reduced. As a method for reducing rolling resistance of a tire (hereinafter, referred to as "improve rolling resistance performance"), for example, a method in which the weight of a belt ply is reduced or stiffness of the belt ply is enhanced, is considered.

However, in the above-described method, uncomfortable vibration is likely to be transmitted to a driver, so that ride comfort may be degraded.

The present invention has been made in view of the aforementioned circumstances, and a main object of the present invention is to provide a pneumatic tire that can achieve improvement of both ride comfort and rolling resistance performance.

SUMMARY OF THE INVENTION

The present invention is directed to a pneumatic tire including a tread portion. The tread portion includes a first tread end and a second tread end, a ground contact surface located between the first tread end and the second tread end, tread rubber forming the ground contact surface, and a belt layer disposed inward of the tread rubber in a tire radial direction. The belt layer includes at least two belt plies each including a plurality of steel cords aligned so as to be inclined relative to a tire equator, and topping rubber covering the steel cords. The ground contact surface includes a tread half width that is a distance in a tire axial direction from the tire equator to the first tread end, and a shoulder reference position that is distant from the tire equator toward the first tread end over a distance that is 75% of the tread half width. When a thickness of the tread rubber at a position of the tire equator is represented by A (mm), a thickness of the tread rubber at the shoulder reference position is represented by H (mm), a product of a strength (N) of each one of the steel cords and a number (ends) of the steel cords per 5 cm width of each one of the belt plies is represented by X (N·ends/5 cm), and a weight of the one belt ply per 1 m$^2$ is represented by G (g/m$^2$), the following formula (1) is satisfied,

(Formula 1)

$$9.8 \leq (H \cdot X)/(A \cdot G) \leq 11.2 \cdots (1).$$

The pneumatic tire of the present invention has the above-described configuration, and can thus achieve improvement of both ride comfort and rolling resistance performance.

BRIEF DESCRIPTION OF THE DRAWINGS

FIG. 1 is a transverse cross-sectional view of a tire according to one embodiment of the present invention;

FIG. 2 is an enlarged cross-sectional view of a tread portion in FIG. 1;

FIG. 3 is a development of a cord aligning state of a belt layer in FIG. 1; and

FIG. 4 is a cross-sectional view of a steel cord according to another embodiment.

## DETAILED DESCRIPTION

An embodiment of the present invention will be described below with reference to the drawings. The drawings are depicted so as to include the characteristics of the present invention, but the drawings may include exaggerated expressions, and the dimensional ratio in the drawings may be expressed so as to be different from that of the actual structure in order to aid in understanding of the present invention. The same or common components are denoted by the same reference characters throughout the embodiments, and repeated description is omitted. A known configuration can be adopted as appropriate for a configuration which will not be described herein.

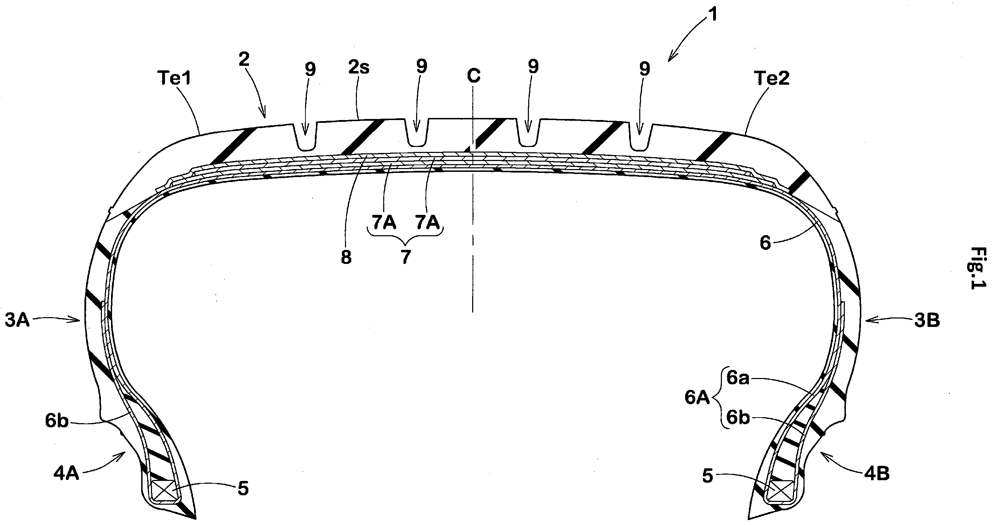

FIG. 1 is a transverse cross-sectional view of a pneumatic tire (hereinafter, may be simply referred to as "tire 1") according to an embodiment of the present invention. FIG. 1 is a tire meridional cross-sectional view of the tire 1 in a standardized state, which includes a tire rotation axis. As shown in FIG. 1, for example, the tire 1 of the present embodiment is suitably used as a pneumatic tire for a passenger car. However, the present invention is not limited thereto, and may be, for example, applied to a heavy duty pneumatic tire.

The "standardized state" refers to a state in which, in the case of a pneumatic tire for which various standards are defined, the tire is mounted on a standardized rim and is inflated to a standardized internal pressure, and no load is applied to the tire. For tires for which various standards are not defined, the standardized state refers to a standard use state, corresponding to a purpose of use of the tire, in which the tire is not mounted to a vehicle and no load is applied to the tire. In the description herein, unless otherwise specified, dimensions and the like of each component of the tire are represented by values measured in the standardized state. Dimensions of components (for example, internal members of the tire 1) which cannot be measured in the standardized state are represented by values measured in a state where the tire 1 is approximated to the standardized state as much as possible.

The "standardized rim" refers to a rim that is defined, in a standard system including a standard on which the tire is based, by the standard for each tire, and is, for example, "standard rim" in the JATMA standard, "Design Rim" in the TRA standard, or "Measuring Rim" in the ETRTO standard.

The "standardized internal pressure" refers to an air pressure that is defined, in a standard system including a standard on which the tire is based, by the standard for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The tire 1 includes a tread portion 2, a first sidewall portion 3A and a second sidewall portion 3B, and a first bead portion 4A and a second bead portion 4B. The first sidewall portion 3A is continuous with an end portion of the tread portion 2 on one side (left side in FIG. 1) in the tire axial direction and extends inward in the tire radial direction. The second sidewall portion 3B is continuous with an end portion of the tread portion 2 on the other side (right side in FIG. 1) in the tire axial direction and extends inward in the tire radial direction. The first bead portion 4A is continuous with the inner side of the first sidewall portion 3A in the tire radial direction. The second bead portion 4B is continuous with the inner side of the second sidewall portion 3B in the tire radial direction.

The tire 1 includes a carcass 6. The carcass 6 extends from the first bead portion 4A through the first sidewall portion 3A, the tread portion 2, and the second sidewall portion 3B to the second bead portion 4B.

The carcass 6 is, for example, formed of one carcass ply 6A. The carcass ply 6A includes, for example, a body portion 6a and turned-up portions 6b. For example, the body portion 6a extends between the first bead portion 4A and the second bead portion 4B. For example, the turned-up portions 6b are continuous with the body portion 6a and are turned up around bead cores 5 from the inner side toward the outer side in the tire axial direction.

The carcass ply 6A includes a plurality of carcass cords, and topping rubber that covers the carcass cords (not shown). For the carcass cord, for example, an organic fiber cord formed of aramid, rayon, or the like is adopted. For example, the carcass cords are preferably aligned at an angle of 70 to 90° relative to the tire equator C. That is, in the present embodiment, the tire 1 has a radial structure carcass.

In the present specification, in a case where numerical ranges of various parameters are described, unless otherwise specified, the numerical range represents a numeral range for the average value of the parameter. Therefore, the above-described numerical range of the angle of the carcass cord represents the average numerical range of angles measured for the plurality of carcass cords at various positions. The same applies to the other parameters described below.

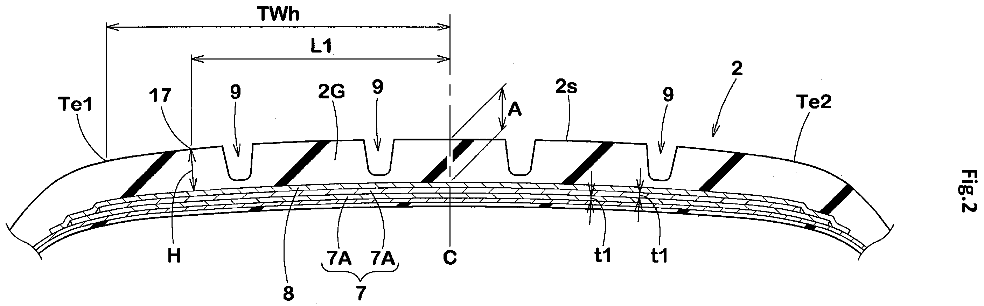

FIG. 2 is an enlarged cross-sectional view of the tread portion 2. As shown in FIG. 2, the tread portion 2 includes a first tread end Te1 and a second tread end Te2, a ground contact surface 2s located between the first tread end Te1 and the second tread end Te2, tread rubber 2G forming the ground contact surface 2s, and a belt layer 7 disposed inward of the tread rubber 2G in the tire radial direction.

The first tread end Te1 and the second tread end Te2 correspond to ends of the ground contact surface 2s in a state where 70% of a standardized load is applied to the tire 1 in the standardized state, and the tread portion 2 is brought into contact with a plane at a camber angle of 0°.

The "standardized load" refers to a load that is defined, in a standard system including a standard on which the tire is based, by the standard for each tire, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard, for pneumatic tires for which various standards are defined. For tires for which various standards are not defined, the "standardized load" refers to the maximum load that is applicable when the tire is used, in accordance with the above-described standard.

The tread rubber 2G forms at least the ground contact surface 2s. In the present embodiment, the tread rubber 2G also forms a part of the outer surface of the first sidewall portion 3A (shown in FIG. 1) and a part of the outer surface of the second sidewall portion 3B (shown in FIG. 1). In the description herein, the tread rubber 2G shown in the drawings is represented as one kind of a rubber material. However, the present invention is not limited to such a configuration. That is, the tread rubber 2G may be formed of a plurality of rubber layers.

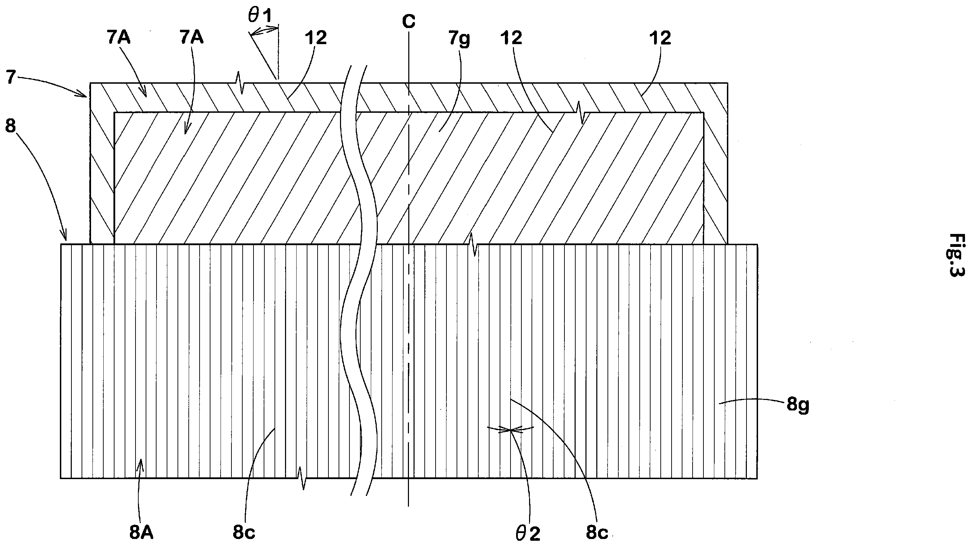

FIG. 3 is a development conceptually showing a cord aligning state of the belt layer 7. As shown in FIG. 3, the belt layer 7 includes at least two belt plies 7A each including a plurality of steel cords 12 aligned so as to be inclined relative to the tire equator C, and topping rubber 7g covering the steel cords 12.

In each of the belt plies 7A, the steel cords 12 are aligned at an angle $\theta1$ of 15 to 45° relative to the tire circumferential direction. The steel cords 12 included in one of the belt plies 7A and the steel cords 12 included in the other of the belt plies 7A are inclined in opposite directions with respect to the tire circumferential direction. Thus, the tread portion 2 is effectively reinforced.

As shown in FIG. 2 and FIG. 3, in the present embodiment, a band layer 8 is disposed outward of the belt layer 7 in the tire radial direction. The band layer 8 is, for example, formed of one band ply 8A. The band ply 8A includes, for example, a band cord 8c disposed at an angle $\theta2$ of 5° or less relative to the tire circumferential direction, and topping rubber 8g covering the band cord 8c. In the present embodiment, the band layer 8 is disposed so as to cover the entirety of the belt layer 7.

As shown in FIG. 2, the ground contact surface 2s of the tread portion 2 includes a tread half width TWh, and a shoulder reference position 17. The tread half width TWh corresponds to a distance in the tire axial direction from the tire equator C to the first tread end Te1. The shoulder reference position 17 corresponds to a position that is distant from the tire equator C toward the first tread end Te1 over a distance L1 that is 75% of the tread half width TWh.

In the present invention, in a case where a thickness of the tread rubber 2G at a position of the tire equator C is represented by A (mm), a thickness of the tread rubber 2G at the shoulder reference position 17 is represented by H (mm), a product of a strength (N) of one steel cord 12 (shown in FIG. 3) and the number (ends) of the steel cords 12 per 5 cm width of one belt ply 7A is represented by X (N·ends/5 cm), and a weight of one belt ply per 1 $m^2$ is represented by G (g/$m^2$), the following formula (1) is satisfied.
(Formula 1)

$$9.8 \leq (H \cdot X)/(A \cdot G) \leq 11.2 \cdots (1)$$

In another embodiment of the present invention, in a case where grooves are formed at the position of the tire equator C and at the shoulder reference position 17, the thickness A and the thickness H are measured in a state where the grooves are filled. These thicknesses each represent the thickness of the tread rubber 2G in the normal direction orthogonal to the ground contact surface 2s. Furthermore, as the thickness, an average of thicknesses measured at a plurality of positions in the tire circumferential direction is preferably adopted.

The strength of the steel cord 12 (shown in FIG. 3, the same applies to the following description) is measured by a known method. However, a measurement method in accordance with JIS G3510 may be adopted as necessary. The number of the steel cords 12 means the number of the steel cords 12 per 5 cm width of one belt ply in the direction orthogonal to the longitudinal direction of the steel cord 12.

In the present embodiment, the steel cords 12 of the two belt plies 7A are assumed to be uniformly distributed. However, in a case where the distribution is non-uniform or in a case where the steel cords 12 have different strengths depending on measurement positions, an average value of values obtained by sampling from the entirety of the two belt plies 7A is adopted as the value of the strength or the number of the steel cores 12 per 5 cm width of one belt ply 7A.

In the present invention, the tire 1 satisfies the above-described formula (1) and can thus achieve improvement of both ride comfort and rolling resistance performance. The reason is as follows.

The inventors of the present invention have found that the product X (N·ends/5 cm) of the strength (N) of one steel cord 12 and the number (ends) of the steel cords 12 per 5 cm width of one belt ply 7A can be used as a parameter for defining stiffness of the belt ply 7A. Furthermore, the inventors have found that the weight G (g/$m^2$) of one belt ply per 1 $m^2$ can be used as a parameter for defining the weight of the belt ply 7A.

Furthermore, the inventors have found that, in a case where a ratio X/G in which the above-described parameters are associated with each other is within a specific range, the stiffness and the weight of the belt ply 7A are made appropriate, and rolling resistance performance can be improved while ride comfort is maintained.

As a result of further research, the inventors have found that it is preferable that, in addition to specifying the ratio X/G for defining the characteristics of the belt ply 7A, the distribution of the thicknesses of the tread rubber 2G, that is, a ratio H/A of the thickness H (mm) of the tread rubber 2G at the shoulder reference position 17 to the thickness A (mm) of the tread rubber 2G at the position of the tire equator C, is taken into consideration.

Specifically, the inventors have found that, in a case where a parameter "(H·X)/(A·G)" that is a product of the ratio H/A and the ratio X/G is defined within a specific range, a ratio between the thicknesses of the portions of the tread rubber 2G in addition to the stiffness and the weight of the belt ply 7A can be taken into consideration, and it is expected to more assuredly maintain ride comfort and improve rolling resistance performance. From such a viewpoint, when the tire of the present invention satisfies the above-described formula (1), the above-described effects can be obtained.

Furthermore, the inventors have made examination as to whether or not the above-described mechanism is exhibited also when the above-described various parameters are greatly changed. As a result, the inventors have found that, in a case where each of the above-described parameters is at least within a numerical range (hereinafter, referred to as "adoptable range") that can be adopted for standard tires, when the above-described formula (1) is satisfied, ride comfort is expected to be maintained, and rolling resistance performance is expected to be improved.

The results of various experiments indicate that the adoptable range for each of the thickness A and the thickness H is 5.0 to 15.0 mm. The adoptable range for the strength (N) of one steel cord 12 is 300 to 700 N. The adoptable range for the number of the steel cords 12 per 5 cm width of one belt ply 7A is 20 to 70. The adoptable range for the weight of the belt ply 7A per 1 $m^2$ is 1000 to 2500 g.

The structure of the present embodiment will be described below in more detail. The structures described below represent specific modes of the present embodiment. Therefore, needless to say, also when the structures described below are not provided, the present invention can exhibit the above-described effects. Also when any one of the structures described below is applied alone to the tire 1 of the present invention having the above-described features, improvement of performance corresponding to each structure can be expected. Furthermore, in a case where some of the structures described below are applied in combination, complex performance improvement corresponding to the structures can be expected.

In the present embodiment, at the ground contact surface 2s of the tread portion 2, a plurality of circumferential grooves 9 are formed so as to extend continuously in the tire circumferential direction. However the present invention is not limited to such a configuration. In another embodiment of the present invention, a plurality of V-shaped grooves may be formed in the tire circumferential direction at the ground contact surface 2s. For example, the V-shaped groove includes a first inclined portion extending so as to be inclined in a first direction relative to the tire axial direction from the first tread end Te1, and a second inclined portion extending so as to be inclined in a second direction opposite to the first direction relative to the tire axial direction from the second tread end Te2, which are not shown.

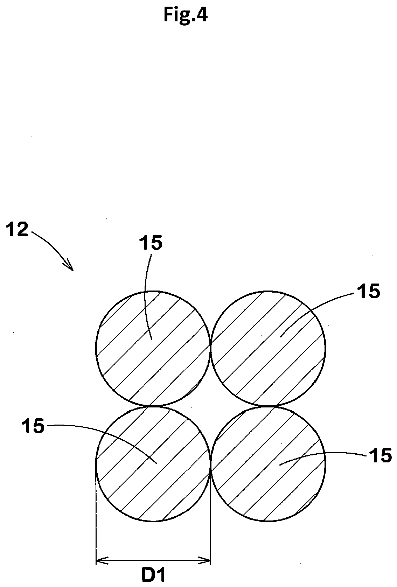

In the present embodiment, the steel cord 12 has, for example, a 1×1 structure formed of a monofilament. FIG. 4 is a cross-sectional view of the steel cord 12 according to another embodiment. As shown in FIG. 4, the steel cord 12 may have a 1×n structure formed of a plurality (n) of filaments 15. FIG. 4 shows the steel cord 12 having a 1×4 structure formed of four filaments 15. In this case, for example, each of the plurality of filaments 15 has an outer diameter D1 of 0.15 to 0.30 mm. Thus, ride comfort and rolling resistance performance are improved in a well-balanced manner.

For example, as a material of the steel cord 12, any one of a so-called ST material (super tensile material) which is expected to exert a tensile strength of 3600 MPa or higher, a so-called UT material (ultra tensile material) which is expected to exert a tensile strength of 4000 MPa or higher, and a so-called MT material (mega tensile material) which is expected to exert a tensile strength of 4500 MPa or higher is adopted. Particularly, in a case where the steel cord 12 has the 1×1 structure, the ST material or the MT material is preferably adopted as the material of the steel cord 12.

In a case where the steel cord 12 has the 1×1 structure, a carbon content of the steel cord 12 is preferably 0.84% to 1.00%. In a case where the steel cord 12 has the 1×4 structure, a carbon content of the steel cord 12 is preferably 0.79% to 1.00%. However, the steel cord 12 of the present invention is not limited to such a configuration. A known measurement method is adopted for measuring the tensile strength.

For example, the steel cord 12 has the outer diameter of 0.36 to 0.55 mm. The numerical range is more suitable for the steel cord 12 having the 1×4 structure. In a case where the steel cord 12 has the 1×1 structure, the steel cord 12 preferably has the outer diameter of 0.36 to 0.42 mm. In a case where the steel cord 12 has the 1×4 structure, the outer diameter corresponds to a diameter of a circle having the same area as the cross-sectional area of the steel cord 12.

For example, the steel cord 12 has a strength of 350 to 540 N. The numerical range is more suitable for the steel cord 12 having the 1×4 structure. In a case where the steel cord 12 has the 1×1 structure, the steel cord 12 preferably has a strength of 400 to 540 N. Thus, ride comfort and rolling resistance performance are improved in a well-balanced manner.

The number of the steel cords 12 per 5 cm width of one belt ply 7A is, for example, 40 to 60. The numerical range is more suitable for the steel cord 12 having the 1×4 structure. In a case where the steel cord 12 has the 1×1 structure, the number of the steel cords 12 per 5 cm width of one belt ply 7A is, for example, preferably 40 to 50.

The product X (N·ends/5 cm) of the strength (N) of the steel cord 12 and the number (ends) of the steel cords 12 is preferably 14000 or more and more preferably 16000 or more, and preferably 24000 or less and more preferably 22000 or less.

As shown in FIG. 2, one belt ply 7A has the thickness t1 of, for example, 0.65 to 0.98 mm. In a case where the steel cord 12 has the 1×4 structure, the thickness t1 is preferably 0.66 to 0.98 mm. In a case where the steel cord 12 has the 1×1 structure, the thickness t1 is preferably 0.65 to 0.85 mm. Thus, the thickness t1 of the belt ply 7A is made appropriate, and rolling resistance performance is further improved.

From the viewpoint of assuredly reducing the weight of the tread portion 2, the weight G of one belt ply per 1 m$^2$ is preferably 2200 g or less and more preferably 2100 g or less. From the viewpoint of ensuring durability of the tread portion 2, the weight G is preferably 1500 g or more and more preferably 1600 g or more.

The ratio H/A of the thickness H of the tread rubber 2G at the shoulder reference position 17 to the thickness A of the tread rubber 2G at the position of the tire equator C is, for example, 0.80 to 0.95. Thus, distribution of the thicknesses of the tread rubber 2G is made appropriate, and ride comfort and rolling resistance performance are improved in a well-balanced manner.

Although the tire according to the embodiments of the present invention has been described above in detail, the present invention is not limited to the above-described specific embodiments but only by the appended claims.

[Examples]

Pneumatic tires each having the basic structure shown in FIG. 1 and a size of 205/55R16 were produced as test tires based on specifications in Tables 1 and 2. As Comparative examples 1 to 3, tires which did not satisfy the above-described formula (1) in the present invention were produced as test tires. The tires of Comparative examples 1 to 3 were substantially the same as the tires of the examples except for the above-described matter. Each test tire was tested for rolling resistance performance and ride comfort. The test methods and specifications common to the test tires were as follows.

<Common specifications>

Rim on which the tire was mounted: 16×6.5
Tire internal pressure: 250 kPa

<Rolling resistance performance>

Rolling resistance of each test tire was measured by a rolling resistance testing machine. A reciprocal of the measured rolling resistance was obtained and indicated as an index, and the result was represented by the index. The greater the value was, the lower the rolling resistance was, that is, the better the rolling resistance performance was.

<Ride comfort>

Each test tire was mounted to a passenger car, the passenger car was caused to run on a public road, and a driver made sensory evaluation for ride comfort. The result was represented by a score. The greater the value was, the more excellent the ride comfort was.

Tables 1 and 2 indicate the test results.

[Table 1]

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Thickness A (mm) of tread rubber at position of tire equator | 12.0 | 9.6 | 9.6 | 9.6 | 10.7 | 10.7 | 10.3 |
| Thickness H (mm) of tread rubber at shoulder reference position | 10.9 | 8.0 | 8.0 | 8.0 | 9.6 | 9.6 | 8.7 |
| Ratio H/A | 0.91 | 0.83 | 0.83 | 0.83 | 0.90 | 0.90 | 0.84 |
| Structure of steel cord | 1×2 | 1×2 | 1×2 | 1×1 | 1×1 | 1×1 | 1×1 |

(continued)

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Product X (N·ends/5 cm) of strength of steel cord and number of steel cords per 5 cm width of one belt ply | 20470 | 20470 | 16020 | 20516 | 20516 | 20516 | 20516 |
| Weight G (g) of belt ply per 1 m² | 2061 | 2061 | 1885 | 1645 | 1645 | 1645 | 1645 |
| (H·X)/(A·G) | 9.02 | 8.28 | 7.08 | 10.39 | 11.19 | 11.19 | 10.53 |
| Whether or not formula (1) was satisfied | not satisfied | not satisfied | not satisfied | satisfied | satisfied | satisfied | satisfied |
| Rolling resistance performance (Index, greater index represents better performance) | 100 | 90 | 80 | 115 | 125 | 125 | 115 |
| Ride comfort (Score, greater score represents better ride comfort) | 100 | 120 | 120 | 120 | 100 | 100 | 120 |
| Combined performance (Total) | 200 | 210 | 200 | 235 | 225 | 225 | 235 |

[Table 2]

| | Ex. 5 | Ex. 6 | Ex. 7 | Ex. 8 | Ex. 9 |
|---|---|---|---|---|---|
| Thickness A (mm) of tread rubber at position of tire equator | 12.0 | 9.6 | 10.7 | 10.7 | 10.3 |
| Thickness H (mm) of tread rubber at shoulder reference position | 10.9 | 8.0 | 9.6 | 9.6 | 8.7 |
| Ratio H/A | 0.91 | 0.83 | 0.90 | 0.90 | 0.84 |
| Structure of steel cord | 1×4 | 1×4 | 1×4 | 1×4 | 1×4 |
| Product X (N·ends/5 cm) of strength of steel cord and number of steel cords per 5 cm width of one belt ply | 21200 | 21200 | 21200 | 21200 | 21200 |
| Weight G (g) of belt ply per 1 m² | 1793.9 | 1793.9 | 1793.9 | 1793.9 | 1793.9 |
| (H·X)/(A·G) | 10.73 | 9.85 | 10.60 | 10.60 | 9.98 |
| Whether or not formula (1) was satisfied | satisfied | satisfied | satisfied | satisfied | satisfied |
| Rolling resistance performance (Index, greater index represents better performance) | 120 | 105 | 120 | 120 | 105 |
| Ride comfort (Score, greater score represents better ride comfort) | 100 | 120 | 100 | 100 | 120 |
| Combined performance (Total) | 220 | 225 | 220 | 220 | 225 |

As indicated in Tables 1 and 2, the tires of the examples improved rolling resistance performance while maintaining ride comfort as compared with the comparative examples. Furthermore, the tires of the examples were excellent also in the combined performance evaluated by the total of the rolling resistance performance and the ride comfort. Therefore, it was confirmed that improvement of both the ride comfort and the rolling resistance performance was achieved.

Claims

1. A pneumatic tire (1) comprising

a tread portion (2), wherein
the tread portion (2) includes

a first tread end (Te1) and a second tread end (Te2),
a ground contact surface (2s) located between the first tread end (Te1) and the second tread end (Te2),
tread rubber (2G) forming the ground contact surface (2s), and
a belt layer (7) disposed inward of the tread rubber (2G) in a tire radial direction,
the belt layer (7) includes at least two belt plies (7A) each including a plurality of steel cords (12) aligned so as to be inclined relative to a tire equator (C), and topping rubber (7g) covering the steel cords (12),
the ground contact surface (2s) includes a tread half width (TWh) that is a distance in a tire axial direction from the tire equator (C) to the first tread end (Te1), and a shoulder reference position (17) that is distant from the tire equator (C) toward the first tread end (Te1) over a distance (L1) that is 75% of the tread half width (TWh),
**characterized in that**
when a thickness of the tread rubber (2G) at a position of the tire equator (C) is represented by A in mm,
a thickness of the tread rubber (2G) at the shoulder reference position (17) is represented by H in mm,
a product of a strength in N of each one of the steel cords (12) and a number of ends of the steel cords (12) per 5 cm width of each one of the belt plies (7A) is represented by X in units of N.ends/5cm, and
a weight of the one belt ply (7A) per 1 m$^2$ is represented by G in g/m$^2$,
the following formula (1) is satisfied,

(Formula 1)

$$9.8 \le (H \cdot X)/(A \cdot G) \le 11.2 \qquad (1)$$

2. The pneumatic tire (1) according to claim 1, wherein, at the ground contact surface (2s), a plurality of circumferential grooves (9) are formed so as to extend continuously in a tire circumferential direction.

3. The pneumatic tire (1) according to claim 1, wherein

   a plurality of V-shaped grooves are formed in the tire circumferential direction at the ground contact surface (2s), and
   the V-shaped grooves each include a first inclined portion extending so as to be inclined in a first direction relative to the tire axial direction from the first tread end (Te1), and a second inclined portion extending so as to be inclined in a second direction opposite to the first direction relative to the tire axial direction from the second tread end (Te2).

4. The pneumatic tire (1) according to any one of claims 1 to 3, wherein each steel cord (12) has a 1×1 structure formed of a monofilament.

5. The pneumatic tire (1) according to any one of claims 1 to 4, wherein each steel cord (12) has a 1×4 structure formed of four filaments (15).

6. The pneumatic tire (1) according to any one of claims 1 to 5, wherein a carbon content of the steel cord (12) is 0.79% to 1.00%.

7. The pneumatic tire (1) according to any one of claims 1 to 6, wherein each steel cord (12) has an outer diameter of 0.36 to 0.55 mm.

8. The pneumatic tire (1) according to any one of claims 1 to 7, wherein each steel cord (12) has a strength (N) of 350 to 540 N.

9. The pneumatic tire (1) according to any one of claims 1 to 8, wherein the number of the steel cords (12) per 5 cm width of each one of the belt plies (7A) is 40 to 60.

10. The pneumatic tire (1) according to any one of claims 1 to 9, wherein the one belt ply (7A) has a thickness (t1) of 0.65 to 0.98 mm.

**Patentansprüche**

1. Luftreifen (1), umfassend

einen Laufflächenabschnitt (2), wobei

der Laufflächenabschnitt (2) umfasst

ein erstes Laufflächenende (Te1) und ein zweites Laufflächenende (Te2),

eine Bodenkontaktfläche (2s), die sich zwischen dem ersten Laufflächenende (Te1) und dem zweiten Laufflächenende (Te2) befindet,

Laufflächengummi (2G), der die Bodenkontaktfläche (2s) bildet, und eine Gürtelschicht (7), die in einer Reifenradialrichtung innen von dem Laufflächengummi (2G) angeordnet ist,

die Gürtelschicht (7) mindestens zwei Gürtellagen (7A) umfasst, die jeweils eine Vielzahl von Stahlkorden (12), die so ausgerichtet sind, dass sie relativ zu einem Reifenäquator (C) geneigt sind, und Deckgummi (7g) umfassen, der die Stahlkorde (12) bedeckt,

die Bodenkontaktfläche (2s) eine Laufflächenhalbbreite (TWh), die ein Abstand in einer Reifenaxialrichtung von dem Reifenäquator (C) zu dem ersten Laufflächenende (Te1) ist, und eine Schulterreferenzposition (17) umfasst, die von dem Reifenäquator (C) in Richtung des ersten Laufflächenendes (Te1) einen Abstand (L1) entfernt ist, der 75 % der Laufflächenhalbbreite (TWh) beträgt,

**dadurch gekennzeichnet, dass**,

wenn eine Dicke des Laufflächengummis (2G) an einer Position des Reifenäquators (C) durch A in mm dargestellt ist,

eine Dicke des Laufflächengummis (2G) an der Schulterreferenzposition (17) durch H in mm dargestellt ist,

ein Produkt einer Festigkeit in N von jedem der Stahlkorde (12) und einer Anzahl von Enden der Stahlkorde (12) pro 5 cm Breite von jeder der Gürtellagen (7A) durch X in Einheiten von N·Enden/5 cm dargestellt ist, und

ein Gewicht der einen Gürtellage (7A) pro 1 m$^2$ durch G in g/m$^2$ dargestellt ist,

die folgende Formel (1) erfüllt ist,

$$\text{(Formel 1)}$$

$$9{,}8 \le (H \cdot X)/(A \cdot G) \le 11{,}2.$$

2. Luftreifen (1) nach Anspruch 1, wobei an der Bodenkontaktfläche (2s) eine Vielzahl von Umfangsrillen (9) so ausgebildet sind, dass sie sich kontinuierlich in einer Reifenumfangsrichtung erstrecken.

3. Luftreifen (1) nach Anspruch 1, wobei

eine Vielzahl von V-förmigen Rillen in der Reifenumfangsrichtung an der Bodenkontaktfläche (2s) ausgebildet sind, und

die V-förmigen Rillen jeweils einen ersten geneigten Abschnitt, der sich so erstreckt, dass er in einer ersten Richtung relativ zu der Reifenaxialrichtung von dem ersten Laufflächenende (Te1) geneigt ist, und einen zweiten geneigten Abschnitt umfassen, der sich so erstreckt, dass er in einer zweiten Richtung entgegengesetzt zu der ersten Richtung relativ zu der Reifenaxialrichtung von dem zweiten Laufflächenende (Te2) geneigt ist.

4. Luftreifen (1) nach einem der Ansprüche 1 bis 3, wobei jeder Stahlkord (12) eine 1x1-Struktur aufweist, die aus einem Monofilament gebildet ist.

5. Luftreifen (1) nach einem der Ansprüche 1 bis 4, wobei jeder Stahlkord (12) eine 1x4-Struktur aufweist, die aus vier Filamenten (15) gebildet ist.

6. Luftreifen (1) nach einem der Ansprüche 1 bis 5, wobei ein Kohlenstoffgehalt des Stahlkords (12) 0,79% bis 1,00% beträgt.

7. Luftreifen (1) nach einem der Ansprüche 1 bis 6, wobei jeder Stahlkord (12) einen Außendurchmesser von 0,36 bis 0,55 mm aufweist.

8. Luftreifen (1) nach einem der Ansprüche 1 bis 7, wobei jeder Stahlkord (12) eine Festigkeit (N) von 350 bis 540 N aufweist.

9. Luftreifen (1) nach einem der Ansprüche 1 bis 8, wobei die Anzahl der Stahlkorde (12) pro 5 cm Breite von jeder der Gürtellagen (7A) 40 bis 60 beträgt.

**10.** Luftreifen (1) nach einem der Ansprüche 1 bis 9, wobei die eine Gürtellage (7A) eine Dicke (t1) von 0,65 bis 0,98 mm aufweist.

**Revendications**

**1.** Bandage pneumatique (1) comprenant

une portion formant bande de roulement (2), dans lequel
la portion formant bande de roulement (2) inclut
une première extrémité de bande de roulement (Te1) et une seconde extrémité de bande de roulement (Te2),
une surface de contact au sol (2s) située entre la première extrémité de bande de roulement (Te1) et la seconde extrémité de bande de roulement (Te2),
de la gomme de bande de roulement (2G) formant la surface de contact au sol (2s), et
une couche de ceinture (7) disposée vers l'intérieur de la gomme de bande de roulement (2G) dans une direction radiale du bandage pneumatique,
la couche de ceinture (7) inclut au moins deux nappes de ceinture (7A) incluant chacune une pluralité de câblés d'acier (12) alignés de manière à être inclinés par rapport à un équateur du bandage pneumatique (C), et de la gomme de recouvrement (7g) recouvrant les câblés d'acier (12),
la surface de contact au sol (2s) inclut une demi-largeur de bande de roulement (TWh) qui est une distance dans une direction axiale du bandage pneumatique depuis l'équateur du bandage pneumatique (C) jusqu'à la première extrémité de bande de roulement (Te1), et une position de référence d'épaulement (17) qui est distante de l'équateur du bandage pneumatique (C) vers la première extrémité de bande de roulement (Te1) sur une distance (L1) qui représente 75 % de la demi-largeur de bande de roulement (TWh),
**caractérisé en ce que**
lorsqu'une épaisseur de la gomme de bande de roulement (2G) au niveau d'une position de l'équateur du bandage pneumatique (C) est représentée par A en mm,
une épaisseur de la gomme de bande de roulement (2G) au niveau de la position de référence d'épaulement (17) est représentée par H en mm,
un produit d'une résistance (N) de chacun des câblés d'acier (12) et d'un nombre d'extrémités des câblés d'acier (12) pour une largeur de 5 cm de chacune des nappes de ceinture (7A) est représenté par X en unités de N·extrémités/5 cm, et
un poids de la nappe de ceinture (7A) pour 1 m² est représenté par G en g/m²,
la formule suivante (1) est satisfaite,

$$(\text{Formule 1})$$

$$9,8 \leq (H \cdot X)/(A \cdot G) \leq 11,2.$$

**2.** Bandage pneumatique (1) selon la revendication 1, dans lequel, au niveau de la surface de contact au sol (2s), une pluralité de rainures circonférentielles (9) sont formées de manière à s'étendre en continu dans une direction circonférentielle du bandage pneumatique.

**3.** Bandage pneumatique (1) selon la revendication 1, dans lequel

une pluralité de rainures en forme de V sont formées dans la direction circonférentielle du bandage pneumatique au niveau de la surface de contact au sol (2s), et
les rainures en forme de V incluent chacune une première portion inclinée s'étendant de manière à être inclinée dans une première direction par rapport à la direction axiale du bandage pneumatique depuis la première extrémité de bande de roulement (Te1), et une seconde portion inclinée s'étendant de manière à être inclinée dans une seconde direction opposée à la première direction par rapport à la direction axiale du bandage pneumatique depuis la seconde extrémité de bande de roulement (Te2).

**4.** Bandage pneumatique (1) selon l'une quelconque des revendications 1 à 3, dans lequel chaque câblé en acier (12) a une structure 1x1 formée d'un monofilament.

**5.** Bandage pneumatique (1) selon l'une quelconque des revendications 1 à 4, dans lequel chaque câblé en acier (12) a une structure 1x4 formée de quatre filaments (15).

6.  Bandage pneumatique (1) selon l'une quelconque des revendications 1 à 5, dans lequel une teneur en carbone du câblé en acier (12) est de 0,79 % à 1,00 %.

7.  Bandage pneumatique (1) selon l'une quelconque des revendications 1 à 6, dans lequel chaque câblé en acier (12) a un diamètre externe de 0,36 à 0,55 mm.

8.  Bandage pneumatique (1) selon l'une quelconque des revendications 1 à 7, dans lequel chaque câblé en acier (12) a une résistance (N) de 350 à 540 N.

9.  Bandage pneumatique (1) selon l'une quelconque des revendications 1 à 8, dans lequel le nombre de câblés d'acier (12) pour une largeur de 5 cm de chacune des nappes de ceinture (7A) est de 40 à 60.

10. Bandage pneumatique (1) selon l'une quelconque des revendications 1 à 9, dans lequel la nappe de ceinture (7A) a une épaisseur (t1) de 0,65 à 0,98 mm.

# Fig.1

# Fig.2

**Fig.3**

**Fig.4**

**EP 4 635 751 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023060432 A
- JP 2022147003 A
- JP H05238202 A
- JP 2003226111 A